# EUROPÄISCHE PATENTSCHRIFT

(11) **EP 2 941 394 B1**
(45) Veröffentlichungstag und Bekanntmachung des Hinweises auf die Patenterteilung: **13.07.2016**
(21) Anmeldenummer: 14707937.0
(22) Anmeldetag: 07.01.2014
(51) Int. Cl.: B65G 45/12, B65G 45/16

(54) **GURTABSTREIFER MIT WINKELHÖHENVERSTELLUNG UND VERFAHREN ZUR EINSTELLUNG DIESER ABSTREIFER**
CONVEYOR BELT SCRAPER WITH HEIGHT ADJUSTMENT OF THE ANGLE AND METHOD FOR ADJUSTING THIS SCRAPER
RACLEUR POUR BANDE CONVOYEUSE AVEC RÉGLAGE DE LA HAUTEUR DE L' ANGLE ET PROCÉDÉ DE RÉGLAGE DU RACLEUR

(30) Priorität: 07.01.2013 DE 102013000039; 22.04.2013 DE 102013006821
(43) Veröffentlichungstag der Anmeldung: 11.11.2015
(73) Patentinhaber: Schwarze, Hans-Otto, D-45665 Recklinghausen (DE)
(72) Erfinder: Schwarze, Hans-Otto, 45665 Recklinghausen (DE)
(74) Vertreter: Bausch, Thomas
(86) Internationale Anmeldenummer: PCT/EP2014/000011
(87) Internationale Veröffentlichungsnummer: WO 2014/106621

(56) Entgegenhaltungen:
- EP-A1- 0 450 133
- EP-B1- 0 090 985
- EP-B1- 0 629 171

## Beschreibung

Die Erfindung betrifft ein Gurtabstreifersystem aus Gurtabstreifmodulen oder Modulen für den Rücklaufbereich von Förderbändern, wobei das Gurtabstreifersystem aus einem einstellbaren, feststehenden oder einem federnd gelagerten Systemträger quer zur Laufrichtung des Gurtbandes und mehreren Abstreifmodulen, die nebeneinander an dem Träger gehalten sind, besteht. Die Abstreifmodule tragen jeweils eine Abstreiflamelle, die schälend auf dem Gurt anliegt und werden federnd an das Gurtband gedrückt. Entsprechende Gurtabstreifersysteme sind seit langem bewährter Stand der Technik, beispielhaft sei hier die EP 254 977 B1 genannt.

Die bekannten Gurtabstreifersysteme werden für die verschiedensten Fördergüter und unter den unterschiedlichsten Förderbedingungen eingesetzt. Sie müssen auch bei sich schnell ändernden Guteigenschaften, etwa im Außenbereich bei einsetzendem Regen, und fernab von Werkstätten, etwa bei der Rohstoffgewinnung, stets zuverlässig arbeiten, wobei lange Standzeiten gefordert werden. Ausfallzeiten sollen so kurz wie möglich gehalten werden, da in der Regel hohe Folgekosten aufgrund von Produktionsausfällen entstehen.

Diesen Forderungen wird durch Modulbauweise begegnet. Übliche Module, wie sie beispielhaft in der EP 254 977 B1 und der DE OS 36 20 960 beschrieben werden, weisen auf:
- einen Fuß, der an einem der Systemträger befestigt ist,
- einem Schneidenträger, an dem eine Abstreiflammelle angebracht ist,
- einer Abstreifkante, die an der Abstreiflamelle angebracht ist,
- und einen Abstreifkörper mit
- einer Buchse, in der der Schneidenträger drehbar gelagert ist, und
- einem Gelenk mit einer Torsionsfeder, welches Fuß und Abstreifkörper verbindet. Das Dokument EP 0 629 171 B1 offenbart einem Gurtabstreifmodul nach dem Oberbegriff des Anspruchs 1, sowie einem verfahren zur Montage und Einstellung von Gurtabstreifmodulen nach dem Oberbegriff des Anspruchs 14.

Hohe Standzeiten erreicht man auch, indem die Abstreiflamellen verschleißfeste Hartmetallschneiden aufweisen, die sich sehr langsam schleifend abnutzen, wobei sich eine messerscharfe Schneide ergibt. Diese messerscharfe Hartmetallschneide führt zu erheblichen Problemen bei Betriebsunterbrechungen und bei der Durchführung von Wartungsaufgaben

Nach Abschaltung einer Gurtförderanlage ist häufig zu beobachten, dass der Fördergurt ein Stück zurückläuft, Ursache hierfür ist etwa, dass sich der während des Betriebes elastisch gedehnte Fördergurt bei Stillstand der Anlage wieder zusammenzieht. Je nach Anlage kann der daraus resultierende unvermeidbare Rücklauf mehrere Meter betragen. Hierbei kann die Hartmetallkante in das Gurtband gezogen werden, was aufgrund der messerscharfen Hartmetallkante zur Beschädigung des Gurtes führt. Bei Wartungsaufgaben ist ein Einschneiden der Hartmetallkante bei der Montage und Demontage des Trägers ebenfalls zu vermeiden, was das Einjustieren erschwert.

Bei Gurtfehlern oder Anbackungen im laufenden Betrieb federt der Gurtabstreifer zunächst vom Gurtband weg, und anschließend federt der Gurtabstreifer an das Gurtband zurück, wobei dieses Zurückfedern sehr präzise erfolgen muss. Hierbei besteht das technische Problem, den Gurtabstreifer und die Abstreiflamelle so zu gestalten, dass während des gesamten Verschleißes die anfangs vorgenommenen Einstellungen am Gurtabstreifersystem praktisch unverändert bleiben, und zwar bezogen auf alle denkbaren Betriebs- und Lastfälle.

Spätestens nach dem vollständigen Verschleiß der Hartmetallschneide müssen die Module gegen neue Module ausgetauscht werden. Bei Überschreitung dieses Wartungstermins kommt es zu einem schnell fortschreitenden Verschleiß am Schneidenträger, bis zuletzt nur noch die Arme der Schneidenträger am Gurt anliegen. Dies kann durch eine starke Erhöhung der Flächenpressung oder die Ausbildung von scharfen Kanten zu einer Beschädigung des Gurtes führen.

Sicherheitsvorschriften verbieten für die Montage von Abstreifern innerhalb und unterhalb der Gurtförderer die Durchführung von Arbeiten ohne besondere Schutzmaßnahmen. So sollten Abstreifer von außen montierbar sein und die erforderliche Feinjustierung der Module an einem unebenen Gurt sollte ebenfalls außerhalb des Gurtbandgerüstes vorgenommen werden können.

Die Aufgabe der Erfindung ist daher, eine einfache und wirtschaftliche Vorrichtung bereitzustellen, die die oben beschriebenen Probleme löst sowie schnell und einfach montierbar ist. Die Absicht ist also, mit der Erfindung einen Abstreifer zu schaffen, der mit der einfachsten modularen Bauweise höchste Reinigungsleistung erbringt, sehr einfach, also ohne Fachpersonal zu montieren ist, wobei die Montage des Abstreifers nur von außerhalb der Gerüstkonstruktion erfolgen soll und das Wechseln der Module bei verschlissenen Abstreifkanten ebenfalls nur von außerhalb der Gerüstkonstruktion erfolgt. Der Abstreifer soll ohne irgendwelche Wartungen bis zum vollständigen Verschleiß der Hartmetallkanten laufen. Ein Rücklauf des Gurtes, wie er aus verschiedenen Gründen häufig vorkommt, muss möglich sein, ohne den Abstreifer oder Gurt zu beschädigen. Der Abstreifer muss eine Einrichtung besitzen, mit der es möglich ist, Gurtunebenheiten zu messen, um danach die Module durch Höhenverstellung den Unebenheiten anzupassen. Der Abstreifer soll sich von Materialanbackungen, die die Funktion des Gerätes beeinträchtigen, weitgehend freihalten.

Die Erfindung löst die Aufgabe mittels eines Gurtabstreifermoduls, welches als eines von mehreren auf einem höhenverstellbaren Systemträger montiert ist, aufweisend
- einen Fuß, der an dem Systemträger befestigt ist,
- einen Schneidenträger, an dem eine Abstreiflammelle angebracht ist,
   - wobei an der Abstreiflamelle eine Abstreifkante angebracht ist, und
   - wobei die Abstreiflamelle gegenüber dem Gurtband in Laufrichtung einen stumpfen Winkel bildet,
- einen Abstreifkörper mit einem zwei Gelenke aufweisenden Gelenkgehäuse, bei dem
   - ein erstes Gelenk, dessen Drehachse quer zur Laufrichtung des Gurtbandes verläuft, mit einer Torsionsfeder, welches Fuß und Abstreifkörper verbindet, die Torsionsfeder dabei die Abstreiflamelle den Gurt drückt,
   - ein zweites Gelenk mit einer Buchse, in der der Schneidenträger drehbar gelagert ist und dessen Drehachse längs zur Laufrichtung des Gurtbandes verläuft, welches den Schneidenträger am laufenden Gurt so ausrichtet, dass die Abstreifkante immer flächig am Gurt anliegt,
- eine Höhenverstellung des Gurtabstreifermoduls am Fuß,
wobei das erste Gelenk mit einer Federwinkelmessung und mit einem Festanschlag für die Auslenkung ausgestattet ist.

Durch den Festanschlag wird bewirkt, dass nach der Montage auf dem Systemträger alle Abstreifkanten der Gurtabstreifermodule zunächst in einer geraden Ebene angeordnet sind. Durch Einführung des Festanschlages wird die Gurtsicherheit erhöht, da das Gurtabstreifermodul auch bei Überschreitung des Wartungstermins oder nach vorzeitigem oder völligem Verschleiß nur bis zum Erreichen dieses Festanschlags nachgeführt und nicht weiter gegen den Gurt gedrückt wird.

Das erste Gelenk mit dem Festanschlag wird in einer bevorzugten Ausgestaltung der Erfindung ausgeführt mit einer Gummitorsionsfeder mit einem Innenvierkant, an dem eine Anschlagscheibe befestigt ist, die an einer Anschlagnase anschlägt, welche an dem Gelenkgehäuse befestigt ist.

Beim Spannen des Abstreifers an einen unebenen Gurt treten unterschiedliche

Vorspannungsgrade an den einzelnen Modulen auf. In einer Ausgestaltung der Erfindung wird vorgesehen, dass diese Vorspannungsunterschiede von einer in das jeweilige Modul integrierten Mess- und Abtastvorrichtung erfasst und danach die Vorspannungsunterschiede durch eine Modulhöhenverstellung ausgeglichen werden.

Aufgrund der Mess- und Abtastvorrichtung ist die optimale Einstellung der Abstreifervorspannung möglich, ohne in der Schurre oder unter dem Förderband arbeiten zu müssen. So können die vor Ort gültigen Sicherheitsvorschriften eingehalten werden, ohne die nach dem herkömmlichen Stand der Technik nötigen aufwändigen Anlageneinrüstungen vornehmen zu müssen, was ein Vorteil der Erfindung ist.

In einer Ausgestaltung der Erfindung wird die Mess- und Abtastvorrichtung als eine integrierte Federwinkelmessung in Kombination mit einem Ring ausgeführt, der drehbar um die Drehachse des ersten Gelenks und auf das erste Gelenk konzentrisch aufgesetzt ist. Dieser Ring wird beim Zurückschwingen des Gurtabstreifers mitgeführt, schwingt aber nicht wieder zurück, sondern verbleibt in der Position der bis dahin größten erreichten Schwingungsamplitude. Er enthält außerdem eine Anzeigevorrichtung, anhand der man die die erreichte Verdrehung gegenüber dem Ausgangszustand erkennen bzw. ablesen kann. Auf diese Weise kann man die Vorspannung der Drehfeder ablesen.

In einer weiteren Ausgestaltung der Erfindung wird die Mess- und Abtastvorrichtung als eine integrierte Federwinkelmessung und einen drehbaren Kunststoffring mit einer Pfeilspitze, die auf einer Skala die Vorspannung der Drehfeder anzeigt, ausgeführt.

In einer weiteren Ausgestaltung der Erfindung wird der drehbare Kunststoffring gegenüber einer Schaumstoffscheibe oder einem Gummiring verdreht, auf der oder dem er mit leichtem Untermaß aufsitzt, so dass der Kunststoffring durch die Reibung zwischen Schaumstoffscheibe bzw. Gummiring und Kunststoffring in seiner ausgelenkten Position festgehalten wird, auch wenn das Modul wieder entspannt wird.

In einer weiteren Ausgestaltung der Erfindung wird an der Seite des Moduls, an der die Arretierung angebracht ist, eine Einrichtung zur elektronischen Drehwinkelmessung vorgesehen. Diese Einrichtung kann beispielsweise in die Abdeckkappe integriert werden. Auf diese Weise kann die Drehwinkelstellung ermittelt, digitalisiert und in ein Signal umgewandelt werden, wobei die Nullstellung und die Endstellung bekannt sind. In einer weiteren Ausgestaltung wird die Einrichtung zur elektronischen Drehwinkelmessung mit einem Sender versehen, der den zu einem Signal umgewandelten Drehwinkelzustand an einen außerhalb des Modules befindlichen Empfänger sendet.

In einer weiteren Ausgestaltung der Erfindung wird am Systemträger ein Empfänger angebracht, der die von den Modulen gesendeten Signale empfängt und in einer Auswertungseinheit auswertet. Diese Auswertungseinheit wird vorzugsweise so betrieben, dass sie das für die weitere Laufzeit ungünstigste, am weitesten verschlissene Modul ermittelt und drei Werte ausgibt: Einen ersten Wert für uneingeschränkten Weiterbetrieb, einen zweiten Wert für anstehenden Wartungsbedarf und einen dritten Wert für den Fall, dass der Endanschlag erreicht wurde und keine Abstreifwirkung mehr erfolgt.

Vorteilhafterweise wird die Auswertungseinheit mit einer Anzeigeeinrichtung verbunden. Eine solche Anzeigeeinrichtung kann beispielsweise so ausgeführt werden, dass am Systemträgerende für den ersten Wert eine grüne Anzeige, für den zweiten Wert eine gelbe Anzeige und im dritten Fall eine rote Anzeige aufleuchtet, so dass der Verschleißzustand wie bei einer Ampel schon von Weitem zu erkennen ist. Natürlich können auch andere Anzeigen die gleiche Wirkung erreichen. Auch ist es natürlich möglich, das digitale Signal in Zahlenwerten anzuzeigen.

In einer weiteren Ausgestaltung wird vorgesehen, die Auswertungseinheit mit einem Sender zu versehen, der die ermittelten Daten oder Werte an eine weiter entfernte Servicestation oder eine Messwarte überträgt. Selbstverständlich können die Anzeigen auch kombiniert werden.

Nachdem die erfindungsgemäßen Module auf dem Systemträger montiert sind, läuft der Einstellvorgang in den folgenden Schritten ab:
1. Der Abstreifer wird mittels der Verlagerung des Systemträgers gegen den Gurt gefahren, bis das erste Modul Kontakt zum Gurt hat. Alle Schleppzeiger der Winkelmesseinrichtung sind jetzt bis zum Festanschlag zurückgedreht.
2. Von dieser Position wird der Abstreifer mittels der Spindelverlagerung des Systemträgers um ein vorgegebenes Maß gegen den Gurt vorgespannt. Die Höhenposition der Spindel der Trägerverlagerung wird markiert.
3. Der Systemträger mit den Modulen wird wieder vom Gurt zurückgefahren und ausgebaut.
4. Anhand der Stellung der Schleppzeiger ist jetzt zu erkennen, ob alle Module die optimale Vorspannung besitzen.
5. Falls die Vorspannung eines Moduls nicht der Vorgabe entspricht, wird das Modul über die Höhenverstellung des Fußteils des Moduls angepasst.
6. Nach der Höhenverstellung der Module werden die Schleppzeiger wieder auf Nullstellung zurückgestellt und der Abstreifer wird wieder gegen den Gurt vorgespannt bis die Position aus Schritt 2 (Markierung) wieder erreicht ist.
Falls erforderlich werden die Schritte 3-6 nochmals wiederholt.

Als Vorteile der Erfindung ergeben sich:
- Die Winkelstellung der Schneidenträger der Module ist bereits nach der Fertigung einheitlich und wird nicht durch Maß- und Materialtoleranzen der Gummielemente oder Abmessungen der Gummifedervierkante bestimmt.
- Nach der Montage auf dem Systemträger sind alle Abstreifkanten der Module in einer Ebene angeordnet. Dadurch wird die Einstellung am Gurt erleichtert und die gleichmäßige Einstellung der Module ermöglicht. Es besteht die Möglichkeit die Federspannwinkel an allen Modulen zu messen und abzugleichen.
- Beim Anspindeln an den Gurt ist das Modul beim ersten Gurtkontakt bereits um einige Grad weiter nach hinten geneigt. Damit sinkt die Gefahr des Verklemmens der Module beim weiteren Spannen des Abstreifers. Ein manuelles Zurückdrücken der Module beim Anspindeln wird somit vermieden.
- Der maximale Verschleißweg wird durch den Festanschlag begrenzt. Dadurch wird verhindert, dass bei nicht rechtzeitiger Abstreiferwartung Gurtschäden durch zu stark verschlissene Module entstehen können.
- Beim Rückwärtslauf des Gurtbandes kann sich der Abstreifer nicht in das Gurtband einschneiden oder sich mit ihm verklemmen.

Die Erfindung wird nachfolgend näher erläutert. Die Figuren Fig. 1 bis Fig. 6 zeigen:
Fig. 1 ein Modul in Vorderansicht
Fig. 2 ein Modul in Seitenansicht
Fig. 3 ein Modul in Schrägansicht mit geöffnetem ersten Gelenk.
Fig. 4 ein Modul mit Höheneinstellung und drehbarem Kunststoffring
Fig. 5 die Höheneinstellung der Gurtabstreifermodule auf einem Systemträger am Gurt
Fig. 6 einen Schnitt mit dem für die Messung erforderlichen Kunststoffring.

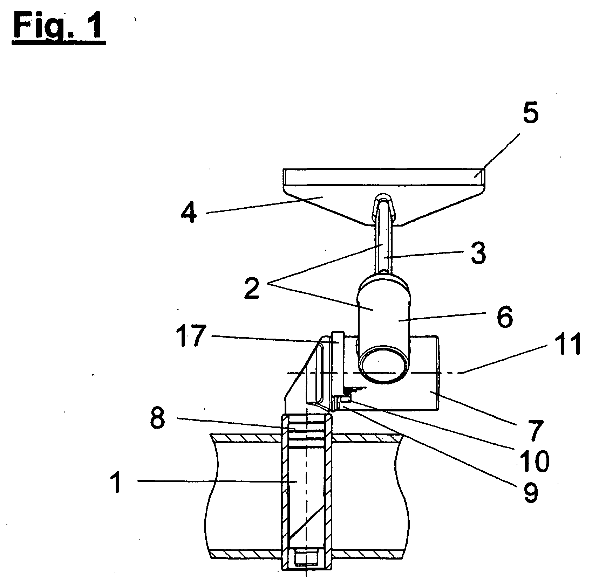

Fig. 1 zeigt in Vorderansicht das Gurtabstreifermodul oder Modul mit einem Fuß 1, einem Abstreifkörper 2, einem Schneidenträger 3, an dem eine Abstreiflamelle 4 angebracht ist, an deren Spitze die Abstreifkante 5 befestigt ist. Der Abstreifkörper 2 enthält auch die Buchse 6, in der der Schneidenträger 3 frei drehbar gelagert ist. Die Buchse 6 ist fest mit dem ersten Gelenk 7, das als Torsionsfedergelenk ausgeführt ist, verbunden und bildet selbst das zweite Gelenk. Die Buchse 6, die das zweite Gelenk bildet, und das Gehäuse des ersten Gelenks bilden den Abstreifkörper 2. Das erste Gelenk ist mit dem Fuß 1 verbunden, der eine Höhenverstellung 8 aufweist. Das erste Gelenk verfügt über eine Federwinkelmessung 9 sowie einen Festanschlag 10 als Mitnehmer, der den drehbaren Kunststoffring 17 beim Vorspannen des Moduls mitnimmt. Das erste Gelenk dreht um die Drehachse 11.

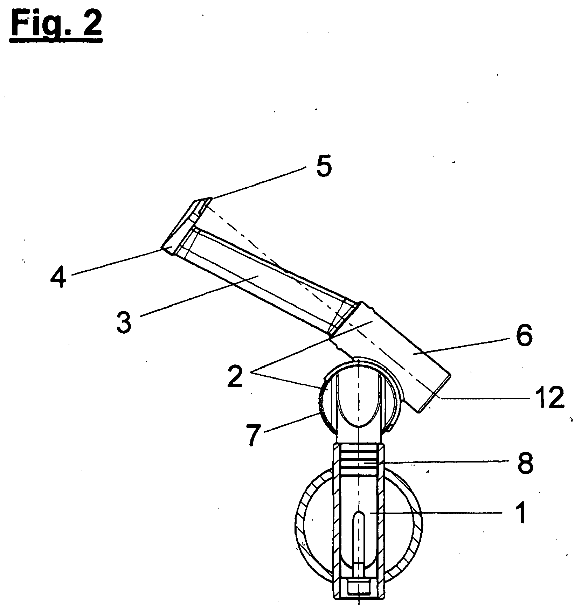

Fig. 2 zeigt in Seitenansicht das Gurtabstreifermodul wie Fig. 1, dargestellt ist darüber hinaus die Drehachse 12 des zweiten Gelenks.

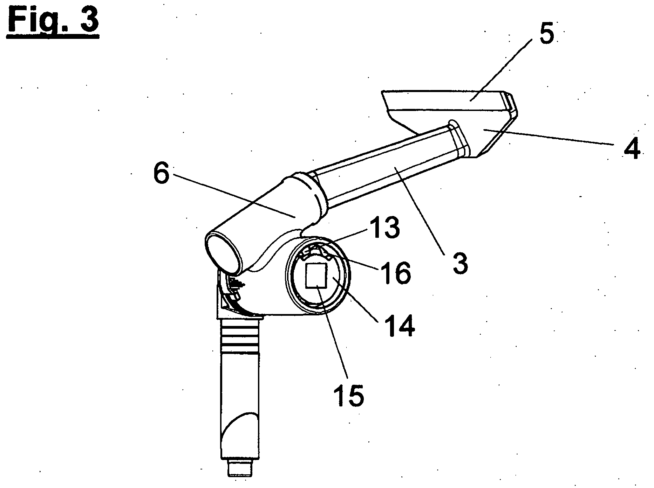

Fig. 3 zeigt in Schrägansicht das Gurtabstreifermodul wie in Fig. 1 und Fig. 2, wobei die der Fig. 2 gegenüberliegende Seite des ersten Gelenks 7 geöffnet gezeigt ist. Hierbei ist die Anschlagnase 13, die fest mit dem Gehäuse des ersten Gelenks verbunden ist, zu sehen. Das Gegenlager wird von der Anschlagscheibe 14 gebildet, die mit dem Innenvierkant 15 verbunden ist. Der Innenvierkant 15 steht dabei fest und dreht sich nicht mit dem Abstreifkörper 2 mit. In dem ersten Gelenk ist andeutungsweise die Gummi-Torsionsfeder 16 zu erkennen, die nach bekanntem Stand der Technik wie beispielsweise in der DE OS 36 20 960 beschrieben ausgeführt ist. Während des Verschleißes der Abstreiflamelle 4 wandert der Schneidenträger 3 immer weiter in Richtung des Gurtes und würde diesen am Ende beschädigen, wenn kein Festanschlag, hier gebildet aus Anschlagnase 13 und Anschlagscheibe 14, dies verhindern würde.

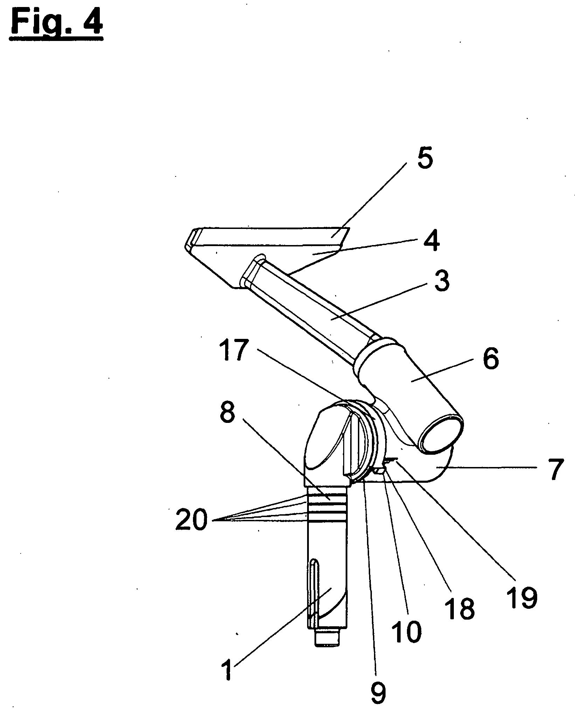

Fig. 4 zeigt in Schrägansicht das Gurtabstreifermodul wie in Fig. 3, jedoch von der anderen Seite. Hierbei ist die Federwinkelmessung 9 sowie der Festanschlag 10 zu sehen. Der Kunststoffring 17 mit der Pfeilspitze 18 zeigt die Vorspannung der Drehfeder an der Skala 19 nach der Entspannung während der Montage an. Diese Vorspannung darf nicht mit der Andrückkraft verwechselt werden, mit der Gurtabstreifer während des Abstreifbetriebs an den Gurt drückt. Die Andrückkraft ändert sich mit zunehmendem Verschleiß, da die Gummi-Torsionsfeder 16 wegen der Winkeländerung etwas nachgibt und die Andrückkraft dadurch entsprechend nachlässt. Die Anzeige der Vorspannkraft dient der Montage. Während des Betriebs bewirkt das Ausweichen des Abstreifkörpers 2 an Abstreifhindernissen am Gurt eine Auslenkung der Gummi-Torsionsfeder 16. Danach zeigt die Pfeilspitze 18 nicht mehr die aktuelle Vorspannung sondern die maximale Auslenkung und damit die maximal während der Fahrt aufgetretene Andrückkraft an. Weiterhin ist zu berücksichtigen, dass zu der Vorspannung der Gummi-Torsionsfeder noch ein Nachspannen durch Hochfahren des Trägersystems erfolgt. Die Andrückkraft ergibt sich aus der Summe der Vorspannkraft und der Nachspannung abzüglich des Spannungsabfalls im Zuge des Nachgebens der Gummi-Torsionsfeder 16 während des Verschleißes.

Wenn der Systemträger, der die einzelnen Gurtabstreifermodule trägt, nach der Montage von unten an den Gurt zurückgefahren wird, federn die Gurtabstreifermodule, nachdem sie den Gurt erreicht haben, beim weiteren Hochfahren entgegen der Fahrtrichtung des Gurtes zurück, wobei sie am Gurt anliegen und reiben. Die Vorspannung wird werkseitig eingestellt durch die Anschlagnase 13 und die Auswahl der Anschlagscheibe 14, bei der die Geometrie der Aussparung in Relation zur Lage des Innenvierkants variiert werden kann.

Der Anschlagscheibe 14 kommen hierbei zwei Funktionen zu: Auf der einen Seite begrenzt sie die Auslenkung des Abstreifkörpers 2 in Richtung des Gurtes, um eine Beschädigung des Gurts nach Verschleiß der Abstreiflamelle 4 zu verhindern, auf der anderen Seite wird mittels der Geometrie der Anschlagscheibe 14 die Vorspannung fest eingestellt. Der Festanschlag ist auf diese Weise über eine Anschlagscheibe 14 und eine Anschlagnase 13 realisiert, es sind jedoch auch andere Mittel zur Erreichung des erfindungsgemäßen Festanschlags möglich, ohne den allgemeinen Erfindungsgedanken zu verlassen. Dieser Festanschlag darf nicht mit dem Festanschlag 10 der Federwinkelmessung 9 verwechselt werden, der sich auf der gegenüberliegenden Seite des ersten Gelenks 7 befindet.

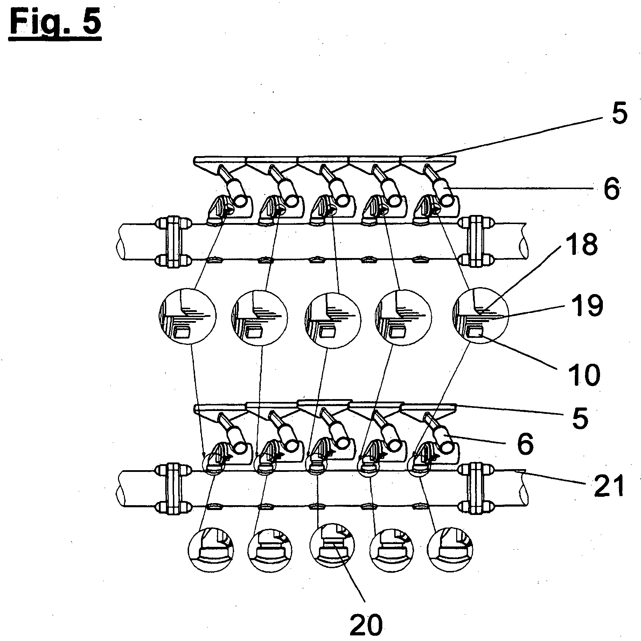

In Fig. 5 ist beispielhaft dargestellt, wie Höhenunterschiede der Gurtfläche gemessen und die Gurtabstreifermodule danach in der Höhe verstellt werden, um zu erreichen, dass anschließend alle Abstreifkanten mit dem gleichen vorgegebenen Druck am Gurt anliegen. In der oberen Ansicht ist ein Abstreifer mit fünf Modulen auf einem Systemträger 21 gezeigt, welcher schon einmal vorgespannt und wieder entspannt worden ist. In der Lupe ist zu sehen, auf welche Vorspannmarkierung die Pfeilspitze des Kunststoffringes deutet. Nur bei den jeweils äußeren Modulen zeigt die Pfeilspitze auf die vierte und längste Markierung, was bedeutet, dass diese Module voll vorgespannt waren. Das mittlere Modul weist auf die zweite und die beiden restlichen auf die dritte Markierung. Diese Module waren demnach nicht voll vorgespannt und müssen in der Höhe, jeweils um die Differenz der Anzeigen zum äußeren Modul, nachgestellt werden. Der Pfeil des mittleren Moduls zeigt auf die zweite Markierung und muss um zwei (4-2=2) Teilstriche nach oben verstellt werden. Bei den beiden anderen Modulen stehen die Zeiger auf dem dritten Teilstrich und müssen jeweils nur um einen (4-3=1) Teilstrich nach oben verstellt werden. In der zweiten Ansicht ist der Abstreifer mit in der Höhe eingestellten Modulen gezeigt. Es ist deutlich zu sehen, dass der Gurt im Arbeitsbereich des Abstreifers konkav gekrümmt ist und die Module nun dieser Krümmung angepasst worden sind. Der Abstreifer kann nun in Betrieb genommen werden und alle Module werden jetzt beim erneuten Anspindeln die gleiche vorgesehene Vorspannung aufweisen. Bei Bedarf kann die Richtigkeit durch eine Wiederholung der geschilderten Prozedur einfach kontrolliert werden.

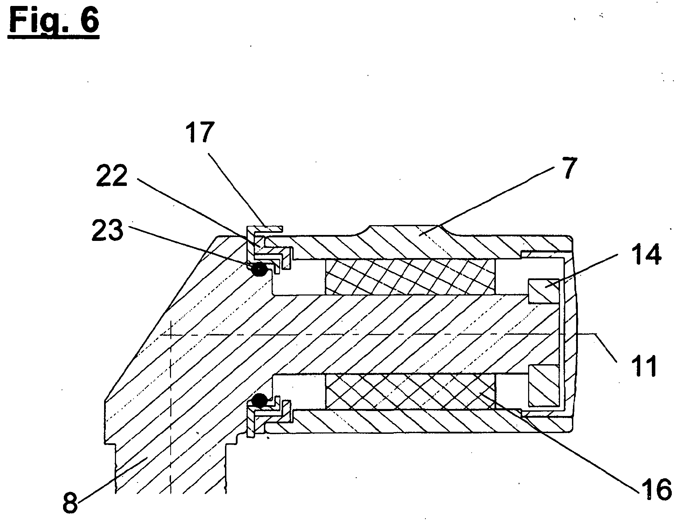

In Fig. 6 ist dargestellt, wie der für die Messung erforderliche Kunststoffring 17 an dem fest stehenden Teil des Gurtabstreifermoduls angebracht ist. Er wird mit leichtem Untermaß auf einen Gummiring 23 aufgedrückt, so dass er, wie oben bereits schon einmal geschildert, immer noch mit mäßigem Kraftaufwand mit der Hand gedreht werden kann.

Im Folgenden wird die Inbetriebnahme der Gurtabstreifermodule detailliert beschrieben. Hierfür werden die Gurtabstreifemodule ab Werk gegen einen inneren Anschlag vorgespannt und so an den Einsatzort geliefert. Auch die Montage der Gurtabstreifermodule auf einem Systemträger kann ab Werk erfolgen, eine Montage am Einsatzort ist aber ebenfalls möglich. Nachdem der neue Systemträger eingesetzt ist, erfolgt das Hochspindeln des Systemträgers in zwei Arbeitsgängen. Beim ersten Arbeitsgang wird der Systemträger hochgefahren, bis die Spitzen der Abstreifkanten eines Moduls gerade den Gurt berühren. Sofern der Gurt uneben ist, können die einzelnen Gurtabstreifermodule einzeln so ausgerichtet und nachjustiert werden, dass jedes gerade so mit seiner Abstreifkante den Gurt berührt, wie zuvor beschrieben.

Danach wird im zweiten Arbeitsgang der Abstreifer um ein in der Montage- und Betriebsanweisung genanntes Maß, beispielsweise 20 mm, weiter hochgespindelt. Anschließend werden die Verlagerungsspindeln festgesetzt, und der Abstreifer ist betriebsbereit. Von jetzt an soll und darf der Abstreifer bis zum vollständigen Verschleiß der Abstreifkanten nicht mehr verstellt werden.

Diese werksseitige Vorspannung ist so groß gewählt, dass die damit beim ersten Anspindeln erzeugte vertikal in Richtung des Gurtes wirkende Andruckkraft schon zur einwandfreien Säuberung des Gurtes ausreicht, also auch dann, wenn der zusätzliche Weg des Nachspannens nach dem zweiten Anspindeln durch Verschleiß aufgebraucht ist. Mit dem zweiten Anspindeln um das in der Betriebsanweisung genannte Maß von beispielsweise 20 mm werden die Torsionsfederspannung und die somit vertikal in Richtung des Gurtes wirkende Andruckkraft entsprechend erhöht. Diese zusätzlich aufgebrachte Federspannung baut sich bei allmählichem Verschleiß der Lamellen langsam wieder ab. Sind die 20 mm aufgebraucht, setzt das Modul auf dem inneren Anschlag wieder auf und die Lamelle liegt drucklos am Gurt an.

Ein unerlässliches Merkmal des Abstreifers ist, dass die Gurtabstreifermodule so ausgebildet sein müssen, dass sie auch bei Gurtrücklauf immer einwandfrei funktionieren. Hierzu kommt es auf das Verhältnis des horizontalen Abstands der Achse 11 zur Abstreifkante 5 und des vertikalen Abstands der Achse 11 zum Gurt beziehungsweise zur Abstreifkante 5 an. Dieses Verhältnis muss immer größer sein, als der Reibbeiwert zwischen Gurt und dem Material der Abstreifkante. Da sich dieses Verhältnis beim zweiten Hochspindeln nur vergrößert, kann das Mindestverhältnis werksseitig eingestellt werden. Für typische Anwendungsfälle beträgt es mindestens 0,7.

Im Verlauf des weiteren Betriebs werden die einzelnen Gurtabstreifermodule zu unterschiedlichen Zeiten ihre Verschleißgrenze erreichen. Trotz der Höhenverstellung des Fußteils um bis zu 20 mm besteht jedoch keine Gefahr für den Gurt, da der Festanschlag, gebildet aus Anschlagnase 13 und Anschlagscheibe 14, dies unabhängig von der Höhenverstellung des Fußes sicher verhindert.

### Bezugszeichenliste

- 1: Fuß
- 2: Abstreifkörper
- 3: Schneidenträger
- 4: Abstreiflamelle
- 5: Abstreifkante
- 6: Buchse
- 7: erstes Gelenk
- 8: Höhenverstellung
- 9: Federwinkelmessung
- 10: Festanschlag
- 11: Drehachse des ersten Gelenks
- 12: Drehachse des zweiten Gelenks
- 13: Anschlagnase
- 14: Anschlagscheibe
- 15: Innenvierkant
- 16: Gummi-Torsionsfeder
- 17: Kunststoffring
- 18: Pfeilspitze
- 19: Skala
- 20: Einstellring
- 21: Systemträger
- 22: Dichtung
- 23: Gummiring

## Patentansprüche

1. Gurtabstreifermodul für eine Abstreifvorrichtung für den Rücklaufbereich von Förderbändern, welches als eines von mehreren auf einem höhenverstellbaren Systemträger (21) montiert ist, aufweisend
• einen Fuß (1), der an dem Systemträger (21) befestigt ist,
• einen Schneidenträger (3), an dem eine Abstreiflammelle (4) angebracht ist,
• wobei an der Abstreiflamelle (4) eine Abstreifkante (5) angebracht ist, und
• wobei die Abstreiflamelle (4) gegenüber dem Gurtband in Laufrichtung einen stumpfen Winkel bildet,
• einen Abstreifkörper (2) mit einem zwei Gelenke aufweisenden Gelenkgehäuse, bei dem
• ein erstes Gelenk (7), dessen Drehachse (11) quer zur Laufrichtung des Gurtbandes verläuft, mit einer Torsionsfeder (16), welches Fuß (1) und Abstreifkörper (2) verbindet, die Torsionsfeder (16) dabei die Abstreiflamelle (4) den Gurt drückt,
• ein zweites Gelenk mit einer Buchse (6), in der der Schneidenträger (3) drehbar gelagert ist und dessen Drehachse (12) längs zur Laufrichtung des Gurtbandes verläuft, welches den Schneidenträger (3) am laufenden Gurt so ausrichtet, dass die Abstreifkante (5) immer flächig am Gurt anliegt,
• eine Höhenverstellung (8) des Gurtabstreifermoduls am Fuß (1),
**dadurch gekennzeichnet, dass** das erste Gelenk (7) mit einer Federwinkelmessung (9) und mit einem Festanschlag (10) für die Auslenkung ausgestattet ist.

2. Gurtabstreifermodul nach Anspruch 1, **dadurch gekennzeichnet, dass** das erste Gelenk (7) mit dem Festanschlag (10) mit einer Gummitorsionsfeder (16) mit einem Innenvierkant (15), an dem eine Anschlagscheibe (14) befestigt ist, die an einer Anschlagnase (13) anschlägt, welche an dem Gelenkgehäuse befestigt ist, ausgeführt ist.

3. Gurtabstreifermodul nach einem der Ansprüche 1 oder 2, **dadurch gekennzeichnet, dass** die Vorspannkraft von einer in das jeweilige Gurtabstreifermodul integrierten Mess- und Abtastvorrichtung erfasst und die Vorspannungsunterschiede durch eine Modulhöhenverstellung ausgeglichen werden.

4. Gurtabstreifermodul nach Anspruch 3, **dadurch gekennzeichnet, dass** die Mess- und Abtastvorrichtung als eine integrierte Federwinkelmessung in Kombination mit einem Ring (17) ausgeführt wird, der drehbar um die Drehachse des ersten Gelenks (11) ist, auf das erste Gelenk (7) konzentrisch aufgesetzt ist, beim Zurückschwingen des Gurtabstreifers mitgeführt wird, danach nicht wieder zurück schwingt, und in der Position der bis dahin größten erreichten Schwingungsamplitude verbleibt.

5. Gurtabstreifermodul nach Anspruch 4, **dadurch gekennzeichnet, dass** die Mess- und Abtastvorrichtung als eine integrierte Federwinkelmessung und einem drehbaren Kunststoffring (17) mit einer Pfeilspitze (18), die auf einer Skala (19) die Vorspannung der Drehfeder anzeigt, ausgeführt ist.

6. Gurtabstreifermodul nach Anspruch 5, **dadurch gekennzeichnet, dass** der drehbare Kunststoffring (17) gegenüber einer Schaumstoffscheibe oder einem Gummiring (23) verdrehbar befestigt wird, auf der oder dem er mit leichtem Untermaß aufsitzt, so dass der Kunststoffring (17) durch die Reibung zwischen Schaumstoffscheibe oder Gummiring (23) und Kunststoffring (17) in seiner ausgelenkten Position festgehalten wird, auch wenn das Modul wieder entspannt wird.

7. Gurtabstreifermodul nach einem der Ansprüche 1 oder 2, **dadurch gekennzeichnet, dass** an der Seite des Gurtabstreifermoduls, an der die Arretierung angebracht ist, eine Einrichtung zur elektronischen Drehwinkelmessung vorgesehen wird.

8. Gurtabstreifermodul nach Anspruch 7, **dadurch gekennzeichnet, dass** die Einrichtung zur elektronischen Drehwinkelmessung in eine Abdeckkappe integriert ist.

9. Gurtabstreifermodul nach einem der Ansprüche 7 oder 8, **dadurch gekennzeichnet, dass** die Einrichtung zur elektronischen Drehwinkelmessung mit einem Sender versehen wird, der den zu einem Signal umgewandelten Drehwinkelzustand an einen außerhalb des Gurtabstreifermodules befindlichen Empfänger sendet.

10. Gurtabstreifermodul nach Anspruch 9, **dadurch gekennzeichnet, dass** am Systemträger ein Empfänger angebracht ist, der die von den Gurtabstreifermodulen gesendeten Signale empfängt und in einer Auswertungseinheit auswertet.

11. Gurtabstreifermodul nach Anspruch 10, **dadurch gekennzeichnet, dass** die Auswertungseinheit mit einer Anzeigeeinrichtung verbunden wird.

12. Gurtabstreifermodul nach einem der Ansprüche 10 oder 11, **dadurch gekennzeichnet, dass** die Auswertungseinheit mit einem Sender versehen ist, der die ermittelten Daten oder Werte an eine weiter entfernte Servicestation oder eine Messwarte überträgt.

13. Verwendung eines Gurtabstreifermoduls nach einem der Ansprüche 1 bis 6 auf einem mittels Spindeln höhenverstellbaren Systemträger für eine Abstreifvorrichtung für den Rücklaufbereich von Förderbändern.

14. Verfahren zur Montage und Einstellung von Gurtabstreifermodulen gemäß einem der Ansprüche 1 bis 12, **gekennzeichnet durch** die folgenden Arbeitsschritte:
(i) Die Abstreifvorrichtung wird mittels einer Spindelverlagerung des Systemträgers (21) gegen den Gurt gefahren, bis das erste Gurtabstreifermodul Kontakt zum Gurt hat. Alle Schleppzeiger der Winkelmesseinrichtung (9) sind jetzt bis zum Festanschlag (10) zurückgedreht.
(ii) Von dieser Position wird die Abstreifvorrichtung mittels der Spindelverlagerung des Systemträgers um einen weiteren Weg gegen den Gurt vorgespannt. Die Höhenposition der Spindel der Trägerverlagerung wird markiert.
(iii) Der Systemträger mit den Gurtabstreifermodulen wird wieder vom Gurt zurückgefahren und ausgebaut.
(iv) Anhand der Stellung der Schleppzeiger ist jetzt zu erkennen, ob alle Gurtabstreifermodule die optimale Vorspannung besitzen.
(v) Falls die Vorspannung eines Gurtabstreifermodul nicht der Vorgabe entspricht ist, wird das Gurtabstreifermodul über die Höhenverstellung des Fußteils (1) des Gurtabstreifermodul angepasst.
(vi) Nach der Höhenverstellung der Gurtabstreifermodule werden die Schleppzeiger wieder auf Nullstellung zurückgestellt und die Abstreifvorrichtung wird wieder gegen den Gurt vorgespannt bis die Position aus Schritt (ii) wieder erreicht ist.

15. Verfahren zum Betreiben einem Gurtabstreifermodul mit einer Auswertungseinheit nach einem der Ansprüche 10 bis 12, **dadurch gekennzeichnet, dass** sie das für die weitere Laufzeit ungünstigste, am weitesten verschlissene Gurtabstreifermodul ermittelt und drei Werte ausgibt:
• einen ersten Wert für uneingeschränkten Weiterbetrieb,
• einen zweiten Wert für anstehenden Wartungsbedarf, und
• einen dritten Wert für den Fall, dass der Endanschlag erreicht wurde und keine Abstreifwirkung mehr erfolgt.

## Claims

1. Belt-stripper module which is intended for a stripping apparatus for the return region of conveying belts and is mounted as one of a number of such modules on a height-adjustable system carrier (21), having
• a base (1), which is fastened on the system carrier (21),
• a cutting-edge carrier (3), on which a stripping lamella (4) is fitted,
• wherein a stripping edge (5) is fitted on the stripping lamella (4), and
• the stripping lamella (4) forms an obtuse angle in relation to the belt, as seen in the running direction,
• a stripping body (2) with an articulation housing having two articulations, in the case of which
• a first articulation (7), of which the axis of rotation (11) runs transversely to the running direction of the belt, with a torsion spring (16), which connects the base (1) and stripping body (2), the torsion spring (16) here pushing the stripping lamella (4) the belt,
• a second articulation with a bushing (6), in which the cutting-edge carrier (3) is mounted in a rotatable manner, the axis of rotation (12) of said second articulation running longitudinally in relation to the running direction of the belt, and said second articulation orienting the cutting-edge carrier (3) on the running belt such that the stripping edge (5) butts always flatly against the belt,
• a height-adjusting means (8) for the belt-stripper module on the base (1),
**characterized in that** the first articulation (7) is provided with a spring-angle-measuring means (9) and with a fixed stop (10) for deflection.

2. Belt-stripper module according to Claim 1, **characterized in that** the first articulation (7) with the fixed stop (10) is configured with a rubber torsion spring (16) with a square socket (15), on which is fastened a stop disk (14), which strikes against a stop nose (13) fastened on the articulation housing.

3. Belt-stripper module according to either of Claims 1 and 2, **characterized in that** the prestressing force is detected by a measuring and sensing mechanism integrated in the respective belt-stripper module, and the differences in prestressing are compensated for by a module-height-adjusting means.

4. Belt-stripper module according to Claim 3, **characterized in that** the measuring and sensing mechanism is configured in the form of an integrated spring-angle-measuring means in combination with a ring (17) which is rotatable about the axis of rotation of the first articulation (11), is positioned concentrically on the first articulation (7), is carried along when the belt stripper swings back, does not swing back again thereafter, and remains in the position of the greatest swinging amplitude reached up until that point.

5. Belt-stripper module according to Claim 4, **characterized in that** the measuring and sensing mechanism is configured in the form of an integrated spring-angle-measuring means and a rotatable plastic ring (17) with an arrowhead (18), which indicates the prestressing of the torsion spring on a scale (19).

6. Belt-stripper module according to Claim 5, **characterized in that** the rotatable plastic ring (17) is fastened such that it can be rotated in relation to a foam disk or a rubber ring (23), on which it is seated with slight undersizing, and therefore the plastic ring (17) is secured in its deflected position by the friction between the foam disk, or rubber ring (23), and plastic ring (17), even when the module is relieved of stressing again.

7. Belt-stripper module according to either of Claims 1 and 2, **characterized in that** a device for electronic angle-of-rotation measurement is provided on that side of the belt-stripper module on which the arresting means is fitted.

8. Belt-stripper module according to Claim 7, **characterized in that** the device for electronic angle-of-rotation measurement is integrated in a covering cap.

9. Belt-stripper module according to either of Claims 7 and 8, **characterized in that** the device for electronic angle-of-rotation measurement is provided with a transmitter, by means of which the angle-of-rotation state converted to a signal is transmitted to a receiver located outside the belt-stripper module.

10. Belt-stripper module according to Claim 9, **characterized in that** the system carrier has fitted on it a receiver which receives the signals transmitted by the belt-stripper modules and evaluates said signals in an evaluation unit.

11. Belt-stripper module according to Claim 10, **characterized in that** the evaluation unit is connected to an indicating device.

12. Belt-stripper module according to either of Claims 10 and 11, **characterized in that** the evaluation unit is provided with a transmitter, by means of which the data or values determined are transmitted to a further-removed service station or a measuring station.

13. Use of a belt-stripper module according to one of Claims 1 to 6 on a system carrier which is height-adjustable by means of spindles and is intended for a stripping apparatus for the return region of conveying belts.

14. Method of installing and adjusting belt-stripper modules according to one of Claims 1 to 12, **characterized by** the following operating steps:
(i) The stripping apparatus is moved toward the belt, by a spindle displacement of the system carrier (21), until the first belt-stripper module is in contact with the belt. All the slave pointers of the angle-measuring device (9) have now been turned back as far as the fixed stop (10).
(ii) From this position, the stripping apparatus is prestressed by a further distance in relation to the belt by the spindle displacement of the system carrier. The height position of the spindle of the carrier-displacement means is marked.
(iii) The system carrier with the belt-stripper modules is moved back again from the belt and removed.
(iv) The positioning of the slave pointers can now be used to show whether all the belt-stripper modules have the optimum level of prestressing.
(v) If the prestressing of a belt-stripper module does not correspond to the stipulated requirements, the belt-stripper module is adapted via the height-adjusting means of the base part (1) of the belt-stripper module.
(vi) Following the height adjustment of the belt-stripper modules, the slave pointers are zeroed again and the stripping apparatus is prestressed in relation to the belt again until the position from step (ii) has been reached again.

15. Method of operating a belt-stripper module with an evaluation unit according to one of Claims 10 to 12, **characterized in that** it determines the belt-stripper module which is most worn and is the least advantageous for the remaining operating period, and emits three values:
• a first value for unrestricted continued operation,
• a second value for maintenance being required, and
• a third value for the case where the end stop has been reached and there is no longer any stripping action taking place.

## Revendications

1. Module de racleur de courroie pour un dispositif de raclage pour une zone de retour de bandes transporteuses, qui est monté comme un de plusieurs modules sur un support de système réglable en hauteur (21), présentant
• un pied (1), qui est fixé au support de système (21),
• un porte-lame (3), sur lequel est montée une lamelle de raclage (4),
• dans lequel une arête de raclage (5) est montée sur la lamelle de raclage (4),
• dans lequel la lamelle de raclage (4) forme un angle obtus par rapport à la courroie dans la direction de déplacement,
• un corps de raclage (2) avec un boîtier articulé présentant deux articulations, dans lequel
• une première articulation (7), dont l'axe de rotation (11) est orienté transversalement à la direction de déplacement de la courroie, avec un ressort de torsion (16), laquelle relie le pied (1) et le corps de raclage (2), le ressort de torsion (16) pousse en l'occurrence la lamelle de raclage (4) la courroie,
• une deuxième articulation avec une douille (6), dans laquelle le porte-lame (3) est monté de façon rotative et dont l'axe de rotation (12) est orienté selon la direction de déplacement de la courroie, laquelle aligne le porte-lame (3) sur la courroie en mouvement, de telle manière que l'arête de raclage (5) s'applique toujours à plat sur la courroie,
• un réglage en hauteur (8) du module de racleur de courroie sur le pied (1),
**caractérisé en ce que** la première articulation (7) est équipée d'une mesure de l'angle de ressort (9) et d'une butée fixe (10) pour la déviation.

2. Module de racleur de courroie selon la revendication 1, **caractérisé en ce que** la première articulation (7) avec la butée fixe (10) avec un ressort de torsion en caoutchouc (16) est réalisée avec un carré intérieur (15), sur lequel est fixé un disque de butée (14) qui bute contre un ergot de butée (13), lequel est fixé au boîtier articulé.

3. Module de racleur de courroie selon une des revendications 1 ou 2, **caractérisé en ce que** la force de précontrainte est détectée par un dispositif de mesure et de balayage intégré dans le module de racleur de courroie respectif et les différences de précontrainte sont compensées par un réglage en hauteur du module.

4. Module de racleur de courroie selon la revendication 3, **caractérisé en ce que** le dispositif de mesure et de balayage est réalisé sous la forme d'une mesure de l'angle de ressort intégrée en combinaison avec un anneau (17), qui peut tourner autour de l'axe de rotation de la première articulation (11), est posé de façon concentrique sur la première articulation (7), est entraîné lors du retrait du racleur de courroie, puis n'oscille plus et reste dans la position avec la plus grande amplitude d'oscillation atteinte entre-temps.

5. Module de racleur de courroie selon la revendication 4, **caractérisé en ce que** le dispositif de mesure et de balayage est réalisé sous la forme d'une mesure de l'angle de ressort intégrée et d'un anneau en matière plastique rotatif (17) avec une pointe de flèche (18), qui indique la précontrainte du ressort de torsion sur une échelle (19).

6. Module de racleur de courroie selon la revendication 5, **caractérisé en ce que** l'anneau en matière plastique rotatif (17) est fixé de façon rotative par rapport à un disque en mousse ou un anneau en caoutchouc (23), sur lequel il est posé avec une légère sous-dimension, de telle manière que l'anneau en matière plastique (17) soit maintenu dans sa position déviée par le frottement entre le disque en mousse ou l'anneau en caoutchouc (23) et l'anneau en matière plastique (17), même lorsque le module est de nouveau détendu.

7. Module de racleur de courroie selon une des revendications 1 ou 2, **caractérisé en ce qu'**il est prévu sur le côté du module, sur lequel le blocage est monté, un dispositif pour la mesure électronique de l'angle de rotation.

8. Module de racleur de courroie selon la revendication 7, **caractérisé en ce que** le dispositif pour la mesure électronique de l'angle de rotation est intégré dans un capot de recouvrement.

9. Module de racleur de courroie selon une des revendications 7 ou 8, **caractérisé en ce que** le dispositif pour la mesure électronique de l'angle de rotation est muni d'un émetteur, qui envoie la position angulaire convertie en un signal à un récepteur se trouvant à l'extérieur du module de racleur de courroie.

10. Module de racleur de courroie selon la revendication 9, **caractérisé en ce qu'**un récepteur est monté sur le support de système, qui reçoit les signaux envoyés par les modules de racleur de courroie et les analyse dans une unité d'évaluation.

11. Module de racleur de courroie selon la revendication 10, **caractérisé en ce que** l'unité d'évaluation est reliée à un dispositif d'affichage.

12. Module de racleur de courroie selon une des revendications 10 ou 11, **caractérisé en ce que** l'unité d'évaluation est munie d'un émetteur, qui transmet les données ou les valeurs déterminées à une station de service plus éloignée ou à un poste de mesure.

13. Utilisation d'un module de racleur de courroie selon l'une quelconque des revendications 1 à 6 sur un support de système réglable en hauteur au moyen de broches pour un dispositif de raclage pour la zone de retour de bandes transporteuses.

14. Procédé de montagne et de réglage de modules de racleur de courroie selon l'une quelconque des revendications 1 à 12, **caractérisé par** les opérations suivantes:
(i) On déplace le dispositif de raclage au moyen d'un déplacement de la broche du support de système (21) contre la courroie, jusqu'à ce que le premier module de racleur de courroie soit en contact avec la courroie. Toutes les aiguilles entraînées du dispositif de mesure d'angle (9) sont à ce moment revenues contre la butée fixe (10).
(ii) A partir de cette position, on précontraint le dispositif de raclage au moyen du déplacement de la broche du support de système d'une autre course contre la courroie. On marque la position en hauteur de la broche du déplacement du support.
(iii) On retire de nouveau de la courroie et on enlève le support de système avec les modules de racleur de courroie.
(iv) A l'aide de la position des aiguilles entraînées, on peut maintenant reconnaître si des modules de racleur de courroie possèdent la précontrainte optimale.
(v) Dans le cas où la précontrainte d'un module de racleur de courroie ne correspond pas à la prescription, on adapte le module de racleur de courroie par le réglage en hauteur de la partie de pied (1) du module de racleur de courroie.
(vi) Après le réglage en hauteur des modules de racleur de courroie, on ramène de nouveau les aiguilles entraînées à la position zéro et on précontraint de nouveau le dispositif de raclage contre la courroie jusqu'à ce que la position de l'étape (ii) soit de nouveau atteinte.

15. Procédé pour faire fonctionner un module de racleur de courroie avec une unité d'évaluation selon l'une quelconque des revendications 10 à 12, **caractérisé en ce qu'**elle détermine le module de racleur de courroie le plus usé, le plus défavorable pour la période de temps suivante, et elle émet trois valeurs:
• une première valeur pour un fonctionnement futur illimité,
• une deuxième valeur pour un besoin d'entretien imminent,
• une troisième valeur pour le cas où la butée finale a été atteinte et il ne se produit plus aucun effet de raclage.
